# FASCICULE DE BREVET EUROPEEN

(11) **EP 3 979 447 B1**
(45) Date de publication et mention de la délivrance du brevet: **10.09.2025**
(21) Numéro de dépôt: 21196417.6
(22) Date de dépôt: 13.09.2021
(51) Int. Cl.: H02H 1/04, H02H 3/32

(54) **DISPOSITIF DIFFÉRENTIEL À COURANT RÉSIDUEL POUR LA PROTECTION D'UNE INSTALLATION ÉLECTRIQUE À TENSION CONTINUE**
FEHLERSTROM-SCHUTZVORRICHTUNG ZUM SCHUTZ EINER ELEKTRISCHEN GLEICHSTROMANLAGE
DIFFERENTIAL DEVICE WITH RESIDUAL CURRENT FOR PROTECTING AN ELECTRICAL INSTALLATION WITH DC VOLTAGE

(30) Priorité: 02.10.2020 FR 2010075
(43) Date de publication de la demande: 06.04.2022
(73) Titulaire: Airbus Operations SAS, 31060 Toulouse (FR)
(72) Inventeur: OMS, Patrick, 31060 TOULOUSE (FR)
(74) Mandataire: Gevers & Orès

(56) Documents cités:
- US-A1- 2004 145 841
- US-A1- 2010 194 354
- US-B1- 6 542 345

## Description

### DOMAINE TECHNIQUE

La présente invention concerne la protection d'installation électrique à tension continue. En particulier, elle concerne un dispositif différentiel à courant résiduel pour la protection d'une installation électrique à tension continue.

### ÉTAT DE LA TECHNIQUE

Dans une installation électrique, un courant électrique qui arrive par un contact de l'installation électrique, puis traverse un ou des conducteurs, doit ressortir par un autre contact de l'installation électrique. Ainsi, si un courant à un contact de l'installation électrique est différent du courant à un autre contact de l'installation électrique, cela signifie qu'il existe une fuite de courant. Or, cette fuite de courant peut être dangereuse pour un équipement lié à l'installation électrique ou pour un opérateur manipulant l'installation électrique. Pour pallier cette gêne, on connaît déjà les dispositifs différentiels pour courants résiduels (« Residual current device » en anglais). Ces dispositifs différentiels permettent de protéger des installations électriques et l'opérateur par la détection des courants résiduels. Lorsqu'un courant résiduel est détecté, ces dispositifs émettent un signal de commande appelé « déclenchement » (« trip » en anglais). Ce déclenchement commande alors une coupure de circuit à un disjoncteur qui coupe alors toute alimentation électrique de l'installation électrique.

Toutefois, ces dispositifs différentiels n'existent pas pour des installations électriques à tension continue dans un environnement très perturbé par des interférences électromagnétiques.

US 2010/194354 divulgue un dispositif différentiel à courant résiduel pour la protection d'une installation électrique.

### EXPOSÉ DE L'INVENTION

La présente invention a pour objet de pallier ce manque en proposant un dispositif différentiel à courant résiduel pour la protection d'une installation électrique à tension continue selon la revendication 1.

À cet effet, l'invention concerne un dispositif différentiel à courant résiduel pour la protection d'une installation électrique à tension continue, l'installation comprenant un contact positif et un contact négatif.

Ainsi, grâce au dispositif, il est possible de protéger des installations électriques à tension continue de courants résiduels.

Selon l'invention, la fonction du filtre passe-bas est de garantir un déclenchement justifié du dispositif différentiel en cas de détection d'une fuite de courant continu, même si l'environnement est très bruité, et non pas d'empêcher des déclenchements intempestifs potentiels dus à des perturbations.

Par ailleurs, le module redresseur double alternance sans seuil comporte une pluralité d'amplificateurs opérationnels, une pluralité de résistances et une pluralité de diodes.

En outre, le module de déclenchement comprend :
- un sous-module comparateur configuré pour émettre un signal représentatif du résultat d'une comparaison entre le courant redressé et le seuil prédéterminé ;
- un sous-module compteur configuré pour émettre un signal de confirmation si le signal représentatif du résultat de la comparaison indique que le courant redressé est supérieur ou égal au seuil prédéterminé pendant une durée supérieure ou égale à la durée prédéterminée ;
- un sous-module de bascule configuré pour émettre la commande de déclenchement lorsque le sous-module compteur émet le signal de confirmation.

De plus, le sous-module comparateur comprend un comparateur présentant une entrée inverseuse configurée pour recevoir un signal représentatif du seuil prédéterminé, une entrée non-inverseuse connectée au module redresseur et configurée pour recevoir le courant redressé, et une sortie configurée pour émettre le signal représentatif du résultat de la comparaison.

En outre, le sous-module compteur comprend un inverseur et un compteur, l'inverseur présentant une sortie et une entrée connectée à la sortie du comparateur et configurée pour recevoir le signal représentatif du résultat de la comparaison, le compteur présentant une entrée de remise à zéro connectée à la sortie de l'inverseur, une entrée d'horloge configurée pour recevoir un signal d'horloge et une sortie configurée pour émettre le signal de confirmation.

Selon une particularité, le sous-module de bascule comprend une bascule D, la bascule D présentant une entrée d'horloge connectée à la sortie du compteur et configurée pour recevoir le signal de confirmation, une entrée de remise à zéro configurée pour recevoir un signal de réarmement représentatif d'un réarmement de la bascule D, une entrée de données configurée pour recevoir un signal complémentaire du signal représentatif de la commande de déclenchement et une sortie configurée pour émettre le signal de commande de déclenchement.

L'invention concerne également une installation électrique à tension continue selon la revendication 7, comprenant un dispositif différentiel à courant résiduel tel que spécifié ci-dessus pour la protection de ladite installation électrique à tension continue. L'invention concerne également un aéronef selon la revendication 8, comprenant une installation électrique à tension continue telle que celle spécifiée ci-dessus.

### BRÈVE DESCRIPTION DES FIGURES

L'invention, avec ses caractéristiques et avantages, ressortira plus clairement à la lecture de la description faite en référence aux dessins annexés dans lesquels :
la figure 1 représente une vue schématique d'une installation électrique à tension continue qui illustre un mode de réalisation de l'invention, et les courants de fuite qui peuvent apparaître,
la figure 2 représente une vue de profil d'un aéronef embarquant une installation électrique à tension continue et un dispositif différentiel à courant résiduel qui illustre un mode de réalisation de l'invention,
la figure 3 représente un schéma électrique du dispositif différentiel à courant résiduel qui illustre un mode de réalisation de l'invention,
la figure 4 représente une courbe présentant un exemple d'évolution du courant de différence avec le temps, en l'absence de défaut,
la figure 5 représente une courbe présentant un exemple d'évolution du courant redressé avec le temps, le courant redressé correspondant au courant de différence de la figure 4, et
la figure 6 représente une courbe présentant un exemple d'évolution du courant de différence avec le temps après avoir été filtré par le filtre passe-bas, lorsqu'un défaut apparaît.

### DESCRIPTION DÉTAILLÉE

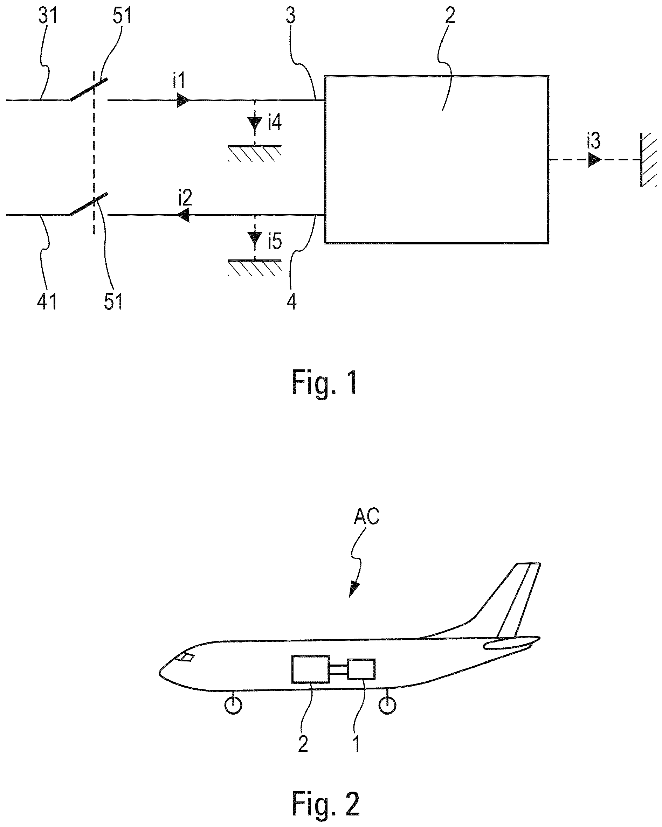

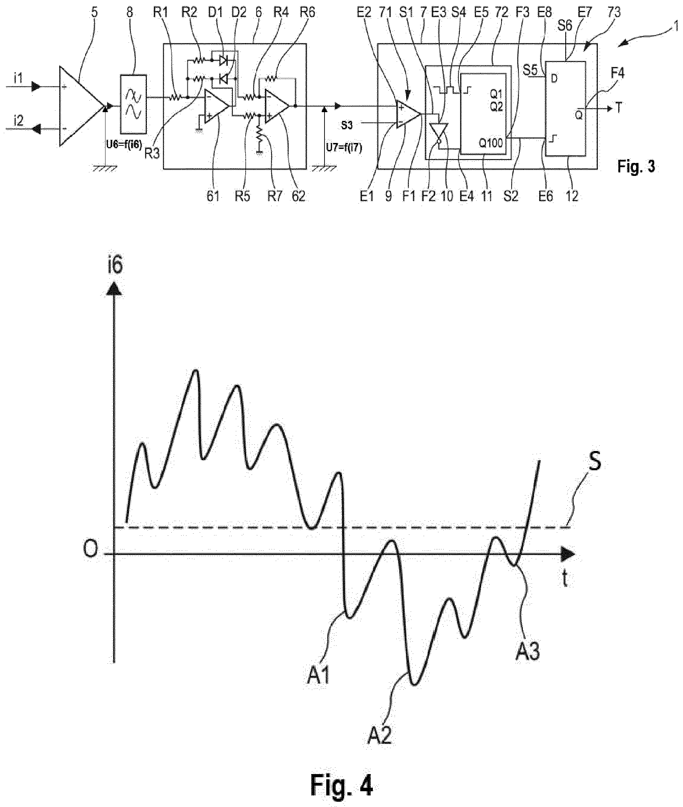

La figure 3 représente un mode de réalisation du dispositif 1 différentiel à courant résiduel pour la protection d'une installation électrique 2 à tension continue représentée en figure 1. Dans la suite de la description, le dispositif différentiel à courant résiduel est appelé « dispositif 1 ».

L'installation électrique 2 peut être embarquée à bord d'un aéronef AC, en particulier un avion de transport.

Comme représenté en figure 1, l'installation électrique 2 comprend un contact positif 3 et un contact négatif 4. Le contact positif peut être connecté à un conducteur de polarité positive 31 permettant d'alimenter l'installation électrique 2 en courant i1 à partir d'un circuit d'alimentation. Le contact négatif peut être connecté à un conducteur de polarité négative 41 permettant au courant i2 de retourner vers le circuit d'alimentation. Comme représenté sur la figure 1, des fuites de courant peuvent se manifester : un courant de fuite i4 du conducteur de polarité positive 31, un courant de fuite i5 du conducteur de polarité négative 41 et un courant de fuite i3 au niveau de l'installation électrique 2.

D'après la loi des nœuds de Kirchhoff, la somme des courants qui arrivent à un nœud est égale à la somme des courants qui en partent. Par conséquent, la différence entre le courant i1 et le courant i2 est égale à la somme des courants de fuite i3, i4 et i5. Si la différence entre le courant i1 et le courant i2 n'est pas nulle, il existe un ou des courants de fuite. Si cette différence atteint un certain seuil, l'installation électrique 2 est coupée du circuit d'alimentation afin de protéger l'installation électrique 2. La figure 1 représente l'installation électrique 2 coupée du circuit d'alimentation par des interrupteurs 51 ouverts pour chacun des conducteurs 31 et 41. Par exemple, ces interrupteurs 51 sont compris dans un disjoncteur. Le dispositif 1 permet ainsi la protection de l'installation électrique 2.

Comme représenté sur la figure 3, le dispositif 1 comprend un module de mesure de différence de courant 5, un module redresseur double alternance sans seuil 6 (« full-wave rectifier without threshold » en anglais) et un module de déclenchement 7.

Le module de différence de courant 5 est configuré pour produire une tension U6 qui correspond à un courant de différence i6 correspondant à la valeur absolue de la différence de courant entre le courant i1 circulant dans le contact positif 3 et le courant i2 circulant dans le contact négatif 4. Sur la figure 3, U6 = f (i6) signifie que la tension U6 est fonction du courant de différence i6.

Le dispositif 1 comprend en outre un filtre passe-bas 8 configuré pour filtrer le courant de différence i6 avant d'être redressé par le module redresseur double alternance sans seuil 6.

L'ordre du filtre passe-bas 8, sa fréquence de coupure et son coefficient d'amortissement peuvent être définis de manière à ce que le filtre passe-bas respecte deux conditions.

La première condition est basée sur la connaissance du spectre des courants de défaut à la terre normaux dans un réseau électrique. Le filtre passe-bas est dimensionné pour obtenir un courant de pic différentiel, après filtrage, inférieur à l'écart entre le courant minimum dangereux pour l'homme et le seuil de détection (seuil prédéterminé). Autrement dit, le filtre passe-bas est configuré de sorte qu'un courant de pic différentiel après filtrage est inférieur ou égal à la différence entre le courant minimum dangereux pour l'homme et le seuil prédéterminé. Cela permet d'éviter d'avoir une remise à zéro d'un compteur 11 du module de déclenchement 7 avant la fin de la durée prédéterminée, causée par des pics bas d'un signal bruité.

Par exemple, le courant minimum dangereux pour l'homme est égal à 90 mA et le seuil de détection est choisi pour être égal à 70 mA, L'écart est donc égal à 20 mA pour cet exemple.

La deuxième condition est basée sur le fait que l'addition du temps de réponse du filtre à un courant dangereux pour l'homme et du temps de confirmation ne devrait pas dépasser la durée prédéterminée pour couper l'installation électrique 2 du circuit d'alimentation. Autrement dit, la somme du délai de réponse du filtre à un courant dangereux pour l'homme et du délai de confirmation de ce délai de réponse est inférieure ou égale à la durée prédéterminée pour couper l'installation électrique 2 du circuit d'alimentation.

Par exemple, le temps de réponse est égal à 5 ms et la durée prédéterminée est égale à 150 ms. Le temps de confirmation est donc égal à 145 ms.

Ainsi, dans l'exemple présenté ci-dessus, le filtre passe-bas 8 choisi respectant les deux conditions est un filtre passe-bas du deuxième ordre ayant une fréquence de coupure de 100 Hz et un coefficient d'amortissement de 0,7.

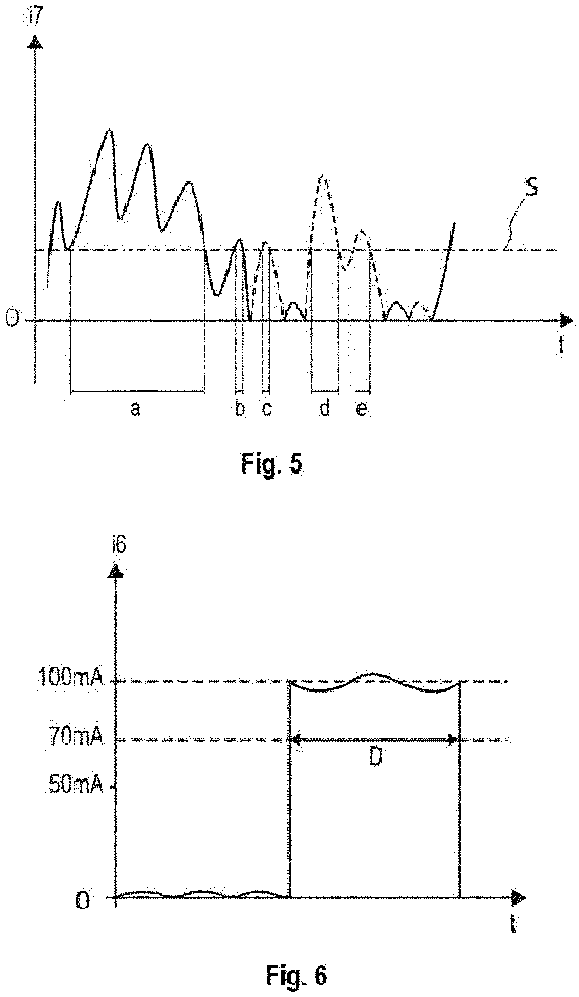

La figure 6 montre une courbe représentant un exemple d'évolution du courant de différence i6 après filtrage par le filtre passe-bas 8. Le seuil prédéterminé est fixé à 70 mA. Des pics bas sont lissés et restent supérieurs au seuil prédéterminé, mais ne remettent pas à zéro le compteur 11 si le temps D où ces pics sont supérieurs au seuil prédéterminé est inférieur à la durée prédéterminée, ce qui empêche l'émission d'une commande de déclenchement T par une bascule D 12 du module de déclenchement 7. Si le temps D est supérieur ou égal à la durée prédéterminée, une commande de déclenchement T peut être émise. Cela permet ainsi la détection de courants de fuite qui n'étaient pas détectables sans filtrage.

Le module redresseur double alternance sans seuil 6 est configuré pour produire une tension U7 qui est une image du courant redressé i7 correspondant au courant de différence filtré redressé par le module redresseur double alternance sans seuil 6. Sur la figure 3, U7 = f (i7) signifie que la tension U7 est fonction du courant redressé i7.

Le module de déclenchement 7 est configuré pour émettre une commande de déclenchement T quand le courant redressé i7 est supérieur ou égal à un seuil prédéterminé pendant une durée prédéterminée.

Le seuil prédéterminé et la durée prédéterminée présentent des valeurs permettant une protection suffisante pour que des fuites de courants ne soient pas dangereuses pour l'homme.

Généralement, le courant minimum qui peut être dangereux pour l'homme est égal à 90 mA pour une durée d'exposition de 150 ms.

Selon un premier exemple non limitatif, un seuil prédéterminé est égal à 150 mA et la durée prédéterminée est égale à 70 ms.

Selon un deuxième exemple non limitatif, un seuil prédéterminé est égal à 70 mA et la durée prédéterminée est égale à 150 ms.

Cette commande de déclenchement T peut être transmise à un disjoncteur qui coupera l'installation électrique 2 du circuit d'alimentation lorsque qu'il aura reçu ladite commande de déclenchement T.

Le module redresseur double alternance sans seuil 6 peut comporter deux amplificateurs opérationnels 61 et 62, sept résistances R1, R2, R3, R4, R5, R6 et R7 et deux diodes D1 et D2. Ce module redresseur double alternance sans seuil 6 peut être formé d'un redresseur mono alternance comprenant l'amplificateur opérationnel 61, les diodes D1 et D2 et les résistances R1, R2 et R3 et d'un additionneur inverse comprenant l'amplificateur opérationnel 62, et les résistances R4, R5, R6 et R7.

La figure 4 montre un exemple d'évolution d'un courant de différence i6 en fonction du temps t. La figure 5 montre le courant redressé i7 correspondant au courant de différence filtré redressé par le module redresseur double alternance sans seuil 6. Comme représenté sur ces figures, le module redresseur double alternance sans seuil 6 permet de redresser les alternances négatives A1, A2, A3 du courant de différence i6. La figure 5 représente, en lignes pointillées courbes, les alternances négatives A1, A2, A3 redressées représentées sur la figure 4. La ligne pointillée S horizontale représente le seuil prédéterminé.

Les lettres a, b, c, d et e sur la figure 5 représentent les durées pour lesquelles le courant redressé i7 est supérieur ou égal au seuil prédéterminé. Si l'une de ces durées a, b, c, d ou e est supérieure ou égale à la durée prédéterminée, une commande de déclenchement T est émise par le module de déclenchement 7.

Comme représenté sur la figure 3, le module de déclenchement 7 peut comprendre un sous-module comparateur 71, un sous-module compteur 72 et un sous-module de bascule 73.

Le sous-module comparateur 71 est configuré pour émettre un signal S1 représentatif du résultat d'une comparaison entre le courant redressé i7 et le seuil prédéterminé.

Le sous-module comparateur 71 peut comprendre un comparateur 9 présentant une entrée inverseuse E1, une entrée non-inverseuse E2 connectée au module redresseur 6 et une sortie F1. La tension U7 qui correspond à une image du courant redressé i7 est destinée à être appliquée à l'entrée non-inverseuse E2. Un signal S3 représentatif du seuil prédéterminé est destiné à être appliqué à l'entrée inverseuse E1. Le signal S1 représentatif du résultat de la comparaison est destiné à être émis par la sortie F1 du comparateur 9.

Le sous-module compteur 72 est configuré pour émettre un signal de confirmation S2 si le signal S1 représentatif du résultat de la comparaison indique que la tension U7 est supérieure ou égale au seuil prédéterminé pendant une durée supérieure ou égale à la durée prédéterminée.

Le sous-module compteur 72 peut comprendre un inverseur 10 et un compteur 11. L'inverseur 10 présente une sortie F2 et une entrée E3 connectée à la sortie F1 du comparateur 9. Le compteur 11 présente une entrée de remise à zéro E4 connectée à la sortie F2 de l'inverseur 10, une entrée d'horloge E5 et une sortie F3. La sortie F2 de l'inverseur 10 est connectée à l'entrée de remise à zéro E4 du compteur 11. Le signal S1 représentatif du résultat de la comparaison est destiné à être appliqué à l'entrée E3 de l'inverseur 10. Un signal d'horloge S4 est destiné à être appliqué à l'entrée d'horloge E5 du compteur 11. Le signal de confirmation S2 est destiné à être émis par la sortie F3 du compteur 11.

De façon non limitative, le signal d'horloge présente un cycle d'horloge d'une durée de 1 ms.

Le sous-module de bascule 73 est configuré pour émettre la commande de déclenchement T lorsque le sous-module compteur 72 émet le signal de confirmation S2.

Le sous-module de bascule 73 peut comprendre une bascule D 12. Cette bascule D 12 présente une entrée d'horloge E6 connectée à la sortie F3 du compteur 11, une entrée de remise à zéro E7, une entrée de données E8 et une sortie F4. Le signal de confirmation S2 est destiné à être appliqué à l'entrée d'horloge E6 de la bascule D 12. Le signal de commande de déclenchement T est destiné à être émis à la sortie F4 de la bascule D 12. Un signal S5 complémentaire du signal représentatif de la commande de déclenchement T est destiné à être appliqué à l'entrée de données E8 de la bascule D 12. Un signal de réarmement S6 représentatif d'un réarmement de la bascule D 12 est destiné à être appliqué à l'entrée de remise à zéro E7 de la bascule D 12. Le signal de réarmement S6 peut être appliqué par un opérateur afin de remettre à zéro la bascule D 12 après que cette bascule D 12 ait émis un signal de commande de déclenchement T.

## Revendications

1. Dispositif différentiel à courant résiduel pour la protection d'une installation électrique (2) à tension continue, l'installation comprenant un contact positif (3) et un contact négatif (4),
**caractérisé en ce que** le dispositif comprend au moins :
- un module de mesure de différence de courant (5) configuré pour produire une tension (U6) correspondant à un courant de différence (i6) qui correspond à une différence de courant entre le courant (i1) circulant dans le contact positif (3) et le courant (i2) circulant dans le contact négatif (4) ;
- un filtre passe-bas (8) configuré pour filtrer le courant de différence (i6) et émettre un courant filtré, le filtre passe-bas étant configuré de sorte qu'un courant de pic différentiel après filtrage soit inférieur ou égal à la différence entre un courant minimum dangereux pour l'homme et un seuil prédéterminé ;
- un module redresseur double alternance sans seuil (6) configuré pour produire une tension (U7) correspondant à un courant redressé (i7) qui correspond au courant filtré redressé par le module redresseur double alternance sans seuil (6) ;
- un module de déclenchement (7) configuré pour émettre une commande de déclenchement (T) quand le courant redressé (i7) est supérieur ou égal au seuil prédéterminé pendant une durée prédéterminée, la durée prédéterminée étant supérieure ou égale à la somme d'une durée de réponse du filtre passe-bas à un courant dangereux pour l'homme et d'une durée de confirmation de ce délai de réponse.

2. Dispositif selon la revendication 1,
**caractérisé en ce que** le module redresseur double alternance sans seuil (6) comporte une pluralité d'amplificateurs opérationnels (61, 62), une pluralité de résistances (R1, R2, R3, R4, R5, R6, R7) et une pluralité de diodes (D1, D2).

3. Dispositif selon l'une quelconque des revendications 1 ou 2,
**caractérisé en ce que** le module de déclenchement (7) comprend :
- un sous-module comparateur (71) configuré pour émettre un signal (S1) représentatif du résultat d'une comparaison entre le courant redressé (i7) et le seuil prédéterminé ;
- un sous-module compteur (72) configuré pour émettre un signal de confirmation (S2) si le signal (S1) représentatif du résultat de la comparaison indique que le courant redressé (i7) est supérieur ou égal au seuil prédéterminé pendant une durée supérieure ou égale à la durée prédéterminée ;
- un sous-module de bascule (73) configuré pour émettre la commande de déclenchement (T) lorsque le sous-module compteur (72) émet le signal de confirmation (S2).

4. Dispositif selon la revendication 3,
**caractérisé en ce que** le sous-module comparateur (71) comprend un comparateur (9) présentant une entrée inverseuse (E1) configurée pour recevoir un signal (S3) représentatif du seuil prédéterminé, une entrée non-inverseuse (E2) connectée au module redresseur (6) et configurée pour recevoir le courant redressé (i7) et une sortie (F1) configurée pour émettre le signal (S1) représentatif du résultat de la comparaison.

5. Dispositif selon la revendication 4,
**caractérisé en ce que** le sous-module compteur (72) comprend un inverseur (10) et un compteur (11), l'inverseur (10) présentant une sortie (F2) et une entrée (E3) connectée à la sortie (F1) du comparateur (9) et configurée pour recevoir le signal (S1) représentatif du résultat de la comparaison, le compteur (11) présentant une entrée de remise à zéro (E4) connectée à la sortie (F2) de l'inverseur (10), une entrée d'horloge (E5) configurée pour recevoir un signal d'horloge (S4) et une sortie (F3) configurée pour émettre le signal de confirmation (S2).

6. Dispositif selon la revendication 5,
**caractérisé en ce que** le sous-module de bascule (73) comprend une bascule D (12), la bascule D (12) présentant une entrée d'horloge (E6) connectée à la sortie (F3) du compteur (11) et configurée pour recevoir le signal de confirmation (S2), une entrée de remise à zéro (E7) configurée pour recevoir un signal de réarmement (S6) représentatif d'un réarmement de la bascule D (12), une entrée de données (E8) configurée pour recevoir un signal (S5) complémentaire du signal représentatif de la commande de déclenchement (T) et une sortie (F4) configurée pour émettre le signal de commande de déclenchement (T).

7. Installation électrique à tension continue,
**caractérisée en ce que** ladite installation comprend un dispositif (1) différentiel à courant résiduel selon l'une quelconque des revendications 1 à 6 pour la protection de ladite installation (2).

8. Aéronef,
**caractérisé en ce que** l'aéronef comprend une installation électrique (2) selon la revendication 7.

## Patentansprüche

1. Fehlerstrom-Differentialvorrichtung zum Schutz einer elektrischen Installation (2) mit Gleichspannung, wobei die Installation einen positiven Kontakt (3) und einen negativen Kontakt (4) umfasst, **dadurch gekennzeichnet, dass** die Vorrichtung mindestens Folgendes umfasst:
- ein Stromdifferenz-Messmodul (5), konfiguriert zum Produzieren einer Spannung (U6), die einem Differenzstrom (i6) entspricht, der einer Stromdifferenz zwischen dem in dem positiven Kontakt (3) fließenden Strom (i1) und dem in dem negativen Kontakt (4) fließenden Strom entspricht;
- einen Tiefpassfilter (8), konfiguriert zum Filtern des Differenzstroms (i6) und zum Emittieren eines gefilterten Stroms, wobei der Tiefpassfilter derart konfiguriert ist, dass ein Differential-Spitzenstrom nach der Filterung kleiner als oder gleich der Differenz zwischen einem für den Menschen gefährlichen minimalen Strom und einem vorbestimmten Schwellenwert ist;
- ein schwellenloses Vollwellen-Gleichrichtermodul (6), konfiguriert zum Produzieren einer Spannung (U7), die einem gleichgerichteten Strom (i7) entspricht, der dem durch das schwellenlose Vollwellen-Gleichrichtermodul (6) gleichgerichteten gefilterten Strom entspricht;
- ein Auslösemodul (7), konfiguriert zum Emittieren eines Auslösebefehls (T), wenn der gleichgerichtete Strom (i7) während einer vorbestimmten Dauer größer als oder gleich dem vorbestimmten Schwellenwert ist, wobei die vorbestimmte Dauer größer als oder gleich der Summe einer Ansprechdauer des Tiefpassfilters gegenüber einem für den Menschen gefährlichen Strom und einer Bestätigungsdauer dieser Ansprechzeit ist.

2. Vorrichtung nach Anspruch 1,
**dadurch gekennzeichnet, dass** das schwellenlose Vollwellen-Gleichrichtermodul (6) eine Vielzahl von Operationsverstärkern (61, 62), eine Vielzahl von Widerständen (R1, R2, R3, R4, R5, R6, R7) und eine Vielzahl von Dioden (D1, D2) umfasst.

3. Vorrichtung nach einem der Ansprüche 1 oder 2,
**dadurch gekennzeichnet, dass** das Auslösemodul (7) Folgendes umfasst:
- ein Komparator-Untermodul (71), konfiguriert, um ein Signal (S1) zu emittieren, das für ein Ergebnis eines Vergleichs zwischen dem gleichgerichteten Strom (i7) und dem vorbestimmten Schwellenwert repräsentativ ist;
- ein Zähler-Untermodul (72), konfiguriert zum Emittieren eines Bestätigungssignals (S2), wenn das Signal (S1), das für das Ergebnis des Vergleichs repräsentativ ist, angibt, dass der gleichgerichtete Strom (i7) während einer Dauer größer als oder gleich der vorbestimmten Dauer größer als oder gleich dem vorbestimmten Schwellenwert ist;
- ein Umschalt-Untermodul (73), konfiguriert zum Emittieren des Auslösebefehls (T) wenn das Zähler-Untermodul (72) das Bestätigungssignal (S2) emittiert.

4. Vorrichtung nach Anspruch 3,
**dadurch gekennzeichnet, dass** das Komparator-Untermodul (71) einen Komparator umfasst, der einen invertierenden Eingang (E1), konfiguriert zum Empfangen eines Signals (S3), das für den vorbestimmten Schwellenwert repräsentativ ist, einen nicht invertierenden Eingang (E2), der mit dem Gleichrichtermodul (6) verbunden und zum Empfangen des gleichgerichteten Stroms (i7) konfiguriert ist, und einen Ausgang (F1), konfiguriert zum Emittieren des für das Ergebnis des Vergleichs repräsentativen Signals, aufweist.

5. Vorrichtung nach Anspruch 4,
**dadurch gekennzeichnet, dass** das Zähler-Untermodul (72) einen Inverter (10) und einen Zähler (11) umfasst, wobei der Inverter (10) einen Ausgang (F2) und einen mit dem Ausgang (F1) des Komparators (9) verbundenen Eingang (E3) aufweist und zum Empfangen des für das Ergebnis des Vergleichs repräsentativen Signals (S1) konfiguriert ist, wobei der Zähler (11) einen mit dem Ausgang (F2) des Inverters (10) verbundenen Reseteingang (E4), einen Takteingang (E5), konfiguriert zum Empfangen eines Taktsignals (S4), und einen Ausgang (F3), konfiguriert zum Emittieren des Bestätigungssignals (S2), aufweist.

6. Vorrichtung nach Anspruch 5,
**dadurch gekennzeichnet, dass** das Schalter-Untermodul (73) einen Schalter D (12) umfasst, wobei der Schalter D (12) einen mit dem Ausgang (F3) des Zählers (11) verbundenen Takteingang (E6) aufweist und konfiguriert ist zum Empfangen des Bestätigungssignals (S2), einen Reseteingang (E7), konfiguriert zum Empfangen eines für eine Rückstellung des Schalters D (12) repräsentativen Rückstellsignals (S6), einen Dateneingang (E8), konfiguriert zum Empfangen eines komplementären Signals (S5) des für den Auslösebefehl (T) repräsentativen Signals und einen Ausgang (F4), konfiguriert zum Emittieren des Auslösebefehls (T).

7. Elektrische Installation mit Gleichspannung,
**dadurch gekennzeichnet, dass** die Installation eine Fehlerstrom-Differentialvorrichtung (1) nach einem der Ansprüche 1 bis 6 für den Schutz der Installation (2) umfasst.

8. Luftfahrzeug,
**dadurch gekennzeichnet, dass** das Luftfahrzeug eine elektrische Installation (2) nach Anspruch 7 umfasst.

## Claims

1. A residual current differential device for protecting a DC-voltage electrical installation (2), the installation comprising a positive contact (3) and a negative contact (4),
**characterized in that** the device comprises at least:
- a current difference measurement module (5) configured so as to produce a voltage (U6) corresponding to a differential current (i6) that corresponds to a current difference between the current (i1) flowing in the positive contact (3) and the current (i2) flowing in the negative contact (4);
- a low-pass filter (8) configured so as to filter the differential current (i6) and emit a filtered current, the low-pass filter being configured such that a peak differential current after filtering is less than or equal to the difference between a minimum current hazardous to humans and a predetermined threshold.
- a full-wave rectifier without threshold module (6) configured so as to produce a voltage (U7) corresponding to a rectified current (i7) that corresponds to the filtered current rectified by the full-wave rectifier without threshold module (6);
- a trip module (7) configured so as to emit a trip command (T) when the rectified current (i7) is greater than or equal to the predetermined threshold for a predetermined duration, the predetermined duration being greater than or equal to the sum of a response period of the low-pass filter for responding to a current hazardous to humans and a confirmation period for this response period.

2. The device as claimed in claim 1,
**characterized in that** the full-wave rectifier without threshold module (6) comprises a plurality of operational amplifiers (61, 62), a plurality of resistors (R1, R2, R3, R4, R5, R6, R7) and a plurality of diodes (D1, D2).

3. The device as claimed in either one of claims 1 or 2,
**characterized in that** the trip module (7) comprises:
- a comparator submodule (71) configured so as to emit a signal (S1) representative of the result of a comparison between the rectified current (i7) and the predetermined threshold;
- a counter submodule (72) configured so as to emit a confirmation signal (S2) confirming whether the signal (S1) representative of the result of the comparison indicates that the rectified current (i7) is greater than or equal to the predetermined threshold for a duration greater than or equal to the predetermined duration;
- a flip-flop submodule (73) configured so as to emit the trip command (T) when the counter submodule (72) emits the confirmation signal (S2).

4. The device as claimed in claim 3,
**characterized in that** the comparator submodule (71) comprises a comparator (9) having an inverting input (E1) configured so as to receive a signal (S3) representative of the predetermined threshold, a non-inverting input (E2) connected to the rectifier module (6) and configured so as to receive the rectified current (i7), and an output (F1) configured so as to emit the signal (S1) representative of the result of the comparison.

5. The device as claimed in claim 4,
**characterized in that** the counter submodule (72) comprises an inverter (10) and a counter (11), the inverter (10) having an output (F2) and an input (E3) connected to the output (F1) of the comparator (9) and configured so as to receive the signal (S1) representative of the result of the comparison, the counter (11) having a reset-to-zero input (E4) connected to the output (F2) of the inverter (10), a clock input (E5) configured so as to receive a clock signal (S4) and an output (F3) configured so as to emit the confirmation signal (S2).

6. The device as claimed in claim 5,
**characterized in that** the flip-flop submodule (73) comprises a D flip-flop (12), the D flip-flop (12) having a clock input (E6) connected to the output (F3) of the counter (11) and configured so as to receive the confirmation signal (S2), a reset-to-zero input (E7) configured so as to receive a reset signal (S6) representative of resetting of the D flip-flop (12), a data input (E8) configured so as to receive a signal (S5) complementary to the signal representative of the trip command (T) and an output (F4) configured so as to emit the trip command signal (T).

7. A DC-voltage electrical installation,
**characterized in that** said installation comprises a residual current differential device (1) as claimed in any one of claims 1 to 6 for protecting said installation (2).

8. An aircraft,
**characterized in that** the aircraft comprises an electrical installation (2) as claimed in claim 7.
